# FASCICULE DE BREVET EUROPEEN

(11) **EP 3 088 062 B1**
(45) Date de publication et mention de la délivrance du brevet: **17.04.2019**
(21) Numéro de dépôt: 16167348.8
(22) Date de dépôt: 27.04.2016
(51) Int. Cl.: A63F 13/24, A63F 13/22

(54) **BOUTON DE COMMANDE À COURSE AJUSTABLE POUR UN DISPOSITIF D'ENTRÉE DE COMMANDE**
STEUERKNOPF MIT VERSTELLBAREM GANG FÜR EINE STEUEREINGANGSVORRICHTUNG
CONTROL BUTTON WITH ADJUSTABLE TRAVEL FOR A COMMAND INPUT DEVICE

(30) Priorité: 29.04.2015 FR 1553883
(43) Date de publication de la demande: 02.11.2016
(73) Titulaire: Playrapid, 13210 Saint Remy de Provence (FR)
(72) Inventeur: RUBIO, Damien, 13210 SAINT REMY de PROVENCE (FR)
(74) Mandataire: IPAZ

(56) Documents cités:
- WO-A1-2012/051664
- WO-A2-2015/004261
- GB-A- 2 403 281
- JP-A- H1 092 267
- US-A1- 2012 142 418
- US-A1- 2012 322 555

## Description

La présente invention concerne un bouton de commande pour un dispositif d'entrée de commande. Elle concerne également un kit pour réaliser un tel bouton de commande, un dispositif d'entrée de commande, tel qu'une manette de jeu, comprenant un tel bouton de commande ainsi qu'un procédé pour réaliser un tel dispositif d'entrée de commande.

Le domaine de l'invention est le domaine des dispositifs d'entrée de commande pour une console de jeu ou un ordinateur, tels qu'une manette.

### Etat de la technique

La plupart des jeux électroniques/informatiques sont commandés par des dispositifs d'entrée de commande, également appelés manettes de jeu.

Chaque manette comprend au moins un bouton, également appelée gâchette, déplaçable par rotation entre une position de départ et une position d'arrivée. Un tel bouton peut être utilisé soit pour entrer une commande binaire, soit pour entrer une commande dont l'intensité dépend de la quantité de déplacement du bouton par rapport à la position de départ. Par exemple, la vitesse de déplacement d'un objet virtuel du jeu électronique est ajustée en fonction de la course du bouton par rapport à sa position de départ.

Or, pour entrer des commandes de manière plus rapide il est parfois souhaitable de diminuer la course du bouton en modifiant la position départ et/ou la position d'arrivée. Plus généralement, il existe un besoin grandissant pour ajuster la course des boutons de commande.

Le document US 8,480,491 B2 propose une manette munie de moyen d'ajustement de la position de départ et/ou de la position d'arrivée d'un bouton de commande. Pour ajuster la position de départ ou la positon d'arrivée, il est proposé une vis venant en butée contre une extrémité d'une pièce rotative, dite de butée, solidaire du bouton de commande et positionnée autour d'un axe de rotation du bouton de commande, et modifiant l'angle maximum de rotation de la pièce de butée.

Le bouton de commande proposé dans ce document nécessite donc un élément d'ajustement externe au bouton de commande, tel qu'une vis. Or, l'utilisation d'un tel moyen d'ajustement présente différents inconvénients. Tout d'abord un tel moyen d'ajustement externe vient modifier l'équilibre du bouton de commande. De plus, un tel moyen d'ajustement nécessite l'utilisation d'un outil, tel qu'un tournevis, et l'ajustement de course du bouton de commande ne peut pas se faire manuellement. En outre, le moyen d'ajustement décrit dans ce document n'est pas robuste.

Le document WO 2012/051664 A1 divulgue un bouton de commande de manette de jeu sous forme de gâchette rotative avec pièce inférieure rotative et pièce supérieure démontable sur la pièce inférieure prévue pour être manipulée par un doigt de l'utilisateur, selon le préambule de la revendication 1.

Un but de la présente invention est de remédier aux inconvénients précités.

Un autre but de l'invention est de proposer un bouton de commande dont la course est ajustable de manière plus ergonomique pour l'utilisateur.

Un autre but de l'invention est de proposer un bouton de commande dont la course est ajustable tout en préservant l'équilibre du bouton de commande.

Enfin un autre but de l'invention est de proposer un bouton de commande de course ajustable plus robuste.

### Exposé de l'invention

L'invention propose d'atteindre au moins l'un des buts précités par un bouton de commande pour un dispositif d'entrée de commande, tel qu'une manette de jeu, prévu rotatif, en particulier dans un logement aménagé dans le châssis dudit dispositif, entre une position, dite de départ, lorsque ledit bouton de commande est au repos, et une position, dite d'arrivée, lorsqu'un effort est appliqué sur ledit bouton de commande en vue d'entrer une commande, ledit bouton de commande comprenant :
- une pièce, dite inférieure, prévue pour être fixée rotative, autour d'un axe de rotation, sur/dans un châssis dudit dispositif d'entrée de commande, et
- une pièce, dite supérieure, prévue pour être fixée de manière démontable, en particulier amovible, sur ladite pièce inférieure ;
caractérisé en ce que ladite pièce supérieure comporte :
- une surface, dite surface de butée de départ, prévue pour venir en butée contre une portion dudit châssis dudit dispositif lorsque ledit bouton de commande est en position départ de sorte à ajuster ladite position de départ ; et/ou
- une surface, dite surface de butée d'arrivée, prévue pour venir en butée contre une portion dudit châssis dudit dispositif lorsque ledit bouton de commande est en position d'arrivée de sorte à ajuster ladite position d'arrivée.

Ainsi, l'invention propose de prévoir un bouton de commande en deux parties, la partie supérieure comportant une surface de butée de départ et/ou une surface de butée d'arrivée contre le châssis du dispositif d'entrée de commande lorsque le bouton de commande est en position de départ, respectivement d'arrivée, de sorte que la position de départ, respectivement d'arrivée, du bouton de commande peut être modifiée/ajustée.

Par conséquent, selon l'invention, l'ajustement de la course du bouton de commande se fait directement par la partie supérieure du bouton de commande, et donc par le bouton de commande lui-même, et non par un élément d'ajustement externe, rapporté au bouton de commande et mobile dans ledit bouton de commande, tel que c'est le cas dans le dispositif du document US 8,480,491 B2. L'invention propose donc un ajustement de la course du bouton de commande tout en préservant l'équilibre et la robustesse du bouton de commande. De plus, l'ajustement de la course du bouton de commande selon l'invention est plus ergonomique car il ne nécessite pas la manipulation avec un outil, tel qu'un tournevis, d'un élément d'ajustement externe au bouton de commande et mobile dans le, ou par rapport au, bouton de commande.

Selon l'invention la partie supérieure peut comprendre en partie, ou constituer la totalité de, la surface de manipulation du bouton de commande par l'utilisateur, c'est-à-dire la surface prévue pour entrer en contact avec un doigt de l'utilisateur et par laquelle l'utilisateur manipule le bouton de commande.

Selon l'invention, le bouton de commande peut comprendre la surface de butée de départ ou la surface de butée d'arrivée ou encore les deux.

Selon un mode de réalisation préféré, le bouton de commande selon l'invention peut comprendre au moins un moyen de fixation, de manière interchangeable, en une même position de fixation, au moins deux pièces supérieures.

Dans ce mode de réalisation, lesdites pièces supérieures peuvent présenter chacune une surface de butée d'arrivée se trouvant à une distance angulaire différente de la portion de châssis du dispositif d'entrée de commande contre laquelle ladite surface de butée d'arrivée vient en butée, en particulier à une distance différente du bord d'un logement aménagé dans ledit châssis et dans lequel le bouton de commande est disposé rotatif. Ainsi, les pièces supérieures sont fixées sur la pièce inférieure toujours à la même position. Par contre, les pièces supérieures comportant chacune une surface de butée d'arrivée se trouvant à une distance différente de la portion de châssis contre laquelle elles viennent en butée, chaque pièce supérieure permet une position d'arrivée différente de l'autre. Il est ainsi possible d'ajuster la position d'arrivée du bouton de commande en sélectionnant telle ou telle pièce supérieure.

Ladite distance mesurée pour la surface de butée d'arrivée peut varier d'un pas compris entre 1° et 15°, d'une pièce supérieure à une autre.

Ladite distance est mesurée lorsque le bouton de commande est en position de repos ou de départ.

Alternativement ou en plus, dans ce mode de réalisation préféré, les pièces supérieures peuvent présenter chacune une surface de butée de départ se trouvant à une distance différente de ladite même position de fixation. Ainsi, les pièces supérieures sont fixées sur la pièce inférieure toujours à la même position. Par contre, chaque pièce supérieure permet une position de départ différente en contraignant le bouton de commande à une rotation différente, dans la position de départ, par butée contre une portion de châssis se trouvant du côté de l'axe de rotation du bouton de commande et sans qu'aucun effort ne soit appliqué par l'utilisateur. Il est ainsi possible d'ajuster la position de départ du bouton de commande en sélectionnant telle ou telle pièce supérieure.

Ladite distance mesurée pour la surface de butée de départ peut varier d'un pas compris entre 1mm et 5mm, d'une pièce supérieure à une autre.

Plus particulièrement, la pièce inférieure peut comporter une unique position de fixation de la pièce supérieure sur ladite pièce inférieure.

Chaque surface de butée peut être plus ou moins large, et peut dans certains cas se limiter à un contact sous la forme d'un point. Cependant, il est préférable que la surface de contact ne se réduise pas à un point car cela provoquerait une dégradation rapide de la surface de butée et/du châssis du dispositif d'entrée de commande, notamment en ce qui concerna la surface de butée d'arrivée.

Suivant un autre mode de réalisation, qui peut éventuellement être combiné au mode de réalisation précédent, le bouton de commande peut comprendre au moins un moyen de fixation de la pièce supérieure sur ladite pièce inférieure en au moins deux positions différentes espacées dans le plan de rotation dudit bouton de commande et se trouvant à des distances différentes :
- de la portion de châssis contre laquelle la surface de butée de départ vient en butée, et/ou
- de la portion de châssis contre laquelle la surface de butée d'arrivée vient en butée.

Autrement dit, le bouton de commande peut comprendre au moins un moyen de fixation de la pièce supérieure sur ladite pièce inférieure en au moins deux positions différentes espacées dans la trajectoire de rotation de ladite pièce inférieure.

Ainsi, avec une même et unique pièce supérieure, il est possible d'ajuster la position de départ, respectivement la position d'arrivée, et donc la course, du bouton de commande.

Préférentiellement, la surface de butée de départ peut se trouver du côté d'une face avant dudit bouton de commande de sorte qu'elle vient en butée contre une portion de châssis se trouvant du côté d'un bord avant d'un logement, aménagé dans le châssis et dans lequel ledit bouton de commande est mis en rotation, et en particulier un bord dudit logement se trouvant du côté d'une face avant dudit dispositif d'entrée de commande.

En particulier, la surface de butée de départ peut se trouver du côté de l'axe de rotation de la pièce inférieure de sorte qu'elle vient en butée contre une portion de châssis se trouvant du côté dudit axe de rotation.

Préférentiellement, la surface de butée d'arrivée peut se trouver du côté d'une face latérale dudit bouton de commande de sorte qu'elle vient en butée contre une portion de châssis se trouvant du côté d'un bord latéral d'un logement dans lequel ledit bouton de commande est mis en rotation, et en particulier un bord se trouvant du côté d'une face latérale dudit dispositif d'entrée de commande.

En particulier, la surface de butée d'arrivée peut se trouver du côté d'une face latérale dudit bouton de commande, et en particulier du côté d'une face latérale de ladite pièce supérieure, qui est perpendiculaire à l'axe de rotation de la pièce inférieure de sorte qu'elle vient en butée contre une portion de châssis perpendiculaire audit axe de rotation.

Suivant un exemple de réalisation particulier, la surface de butée d'arrivée peut être prévue au niveau d'une extrémité, en regard vers la pièce inférieure, d'une forme faisant saillie de la pièce supérieure, et donc de la pièce inférieure, du côté d'une face latérale de ladite pièce supérieure, et donc de la pièce inférieure, perpendiculaire à l'axe de rotation de la pièce inférieure, et donc du bouton de commande.

Avantageusement, la pièce supérieure peut être fixée sur la pièce inférieure suivant une direction, dite d'assemblage, formant un angle inférieure ou égale à 45° avec ledit axe de rotation, ce qui permet de réaliser un assemblage de la pièce supérieure avec la pièce inférieure robuste diminuant les risques de désassemblage intempestif desdites pièces.

Préférentiellement, la direction d'assemblage peut être parallèle à l'axe de rotation, ou du moins présenter un angle inférieur ou égal à 5°, ce qui permet d'augmenter la robustesse de l'assemblage de la pièce supérieure avec la pièce inférieure et de diminuer encore plus, les risques de désassemblage intempestif.

Avantageusement, la direction d'assemblage peut en outre ne pas être parallèle au plan de rotation du bouton de commande, qui est le même que le plan de rotation de la pièce inférieure.

Plus particulièrement, la direction d'assemblage peut présenter un angle supérieur ou égal à 45°, et en particulier un angle compris entre 85° et 95°, par rapport au plan de rotation du bouton de commande. Préférentiellement, la direction d'assemblage peut être perpendiculaire au plan de rotation du bouton de commande. Ainsi, les risques de désassemblage intempestif sont encore plus faibles, voire annulés.

Avantageusement, la pièce supérieure peut être fixée sur la pièce inférieure par rotation ou par translation.

Préférentiellement, la pièce supérieure peut être fixée sur la pièce inférieure par translation, une telle fixation étant plus simple, plus rapide et plus ergonomique à réaliser pour l'utilisateur.

Suivant un exemple de réalisation préféré, l'une des pièces inférieure et supérieure peut comprendre une forme de fixation mâle, en particulier solidaire de ladite pièce, prévue pour s'insérer dans une forme de fixation femelle prévue sur l'autre des pièces inférieure et supérieure, en particulier solidaire de ladite pièce,.

De tels moyens de fixation permettent de réaliser une fixation manuelle robuste de la pièce supérieure sur la pièce inférieure, sans utilisation d'un outil de fixation pour le montage/démontage de la pièce supérieure sur/de la pièce inférieure.

De plus, de telles formes de fixation mâles/femelles peuvent être réalisées lors de la fabrication de chacune des pièces, par exemple par moulage.

Plus particulièrement, la forme de fixation mâle et la forme de fixation femelle peuvent présenter une section en forme d'un « T », ou d'un trapèze.

Le bouton de commande selon l'invention peut en outre comprendre un moyen de verrouillage en rotation et/ou en translation de la pièce supérieure par rapport à la pièce inférieure, après que la pièce supérieure est fixée à la pièce inférieure.

Un tel moyen de verrouillage est avantageusement indépendant du moyen de fixation de la pièce supérieure sur la pièce inférieure de sorte à assurer un deuxième niveau de verrouillage, en cas de défaillance dudit moyen de fixation.

Un tel moyen de verrouillage peut comprendre un élément de verrouillage mâle prévu sur l'une des pièces, inférieure ou supérieure, venant s'insérer dans un élément de verrouillage femelle prévu sur l'autre des pièces inférieure ou supérieure, suivant une direction perpendiculaire à la direction d'assemblage de la pièce supérieure avec la pièce inférieure, lorsque la pièce supérieure est assemblée avec la pièce inférieure.

Par ailleurs, la pièce supérieure peut comporter une surface, dite de manipulation, prévue pour recevoir un appui d'un doigt d'un utilisateur pour entrer une commande de l'utilisateur.

Suivant un mode de réalisation particulier, le bouton de commande peut comporter toute la surface de manipulation dudit bouton de commande de sorte que ledit bouton de commande peut être manipulé uniquement au travers de la pièce supérieure, sans aucun accès à la pièce inférieure lors de manipulation du bouton de commande.

De plus, suivant un mode de réalisation particulier, la pièce inférieure ne peut être démontée du dispositif d'entrée de commande sans démontage partiel ou total du châssis dudit dispositif d'entrée de commande.

En outre, au moins une partie de la surface d'appui peut avantageusement comporter un revêtement présentant un plus petit coefficient de dureté et/ou un plus grand coefficient de frottement de sorte à procurer une utilisation plus ergonomique pour l'utilisateur.

Un tel revêtement peut être réalisé en un plastique mou, tel que du TPU ou du TPE.

Selon un autre aspect de la même invention il est proposé un kit pour réaliser un bouton de commande selon l'invention, comprenant :
- au moins une pièce inférieure, et
- au moins deux pièces supérieures pouvant être montées de manière interchangeables sur ladite pièce inférieure en une même position de fixation, et présentant chacune :
   - une surface de butée de départ se trouvant à une distance différente de ladite même position de fixation ; et/ou
   - une surface de butée d'arrivée se trouvant à une distance angulaire différente de la portion de châssis du dispositif d'entrée de commande contre laquelle ladite surface de butée d'arrivée vient en butée.

Un tel kit permet de réaliser un bouton de commande dans lequel :
- la pièce de base est fixée à un dispositif d'entrée de commande, et
- la pièce supérieure peut être changée à volonté en vue de modifier et d'ajuster la position de départ, et/ou la position d'arrivée, et donc la course du bouton de commande.

Selon un autre aspect de la même invention, il est proposé un dispositif d'entrée de commande, tel qu'une manette de jeu, comprenant au moins un bouton de commande selon l'invention, en particulier disposé rotatif dans un logement aménagé dans le châssis, ou la coque, dudit dispositif d'entrée de commande.

En particulier, le dispositif d'entrée de commande selon l'invention peut comprendre deux faces latérales, prévue chacune pour être tenue par une main de l'utilisateur, ledit dispositif comprenant, du côté de chacune desdites faces latérales, au moins un bouton de commande selon l'invention, chacun disposé rotatif dans un logement aménagé dans le châssis dudit dispositif, et agencé pour être actionné par un index de l'utilisateur.

Selon encore un autre aspect de la même invention, il est proposé un procédé pour réaliser un dispositif d'entrée de commande selon l'invention, caractérisé en ce qu'il comprend les étapes suivantes réalisées pour au moins un bouton de commande selon l'invention :
- ouvrir au moins partiellement un châssis dudit dispositif,
- fixer la pièce inférieure libre en rotation audit dispositif, en particulier dans un logement prévu dans le châssis dudit dispositif,
- fermer ledit châssis dudit dispositif, et
- assembler la pièce supérieure sur ladite pièce inférieure.

Dans un mode de réalisation particulier, le procédé selon l'invention peut en outre comprendre une étape de sélection d'une pièce supérieure parmi au moins deux pièces supérieures, chacune desdites pièces supérieures pouvant être montée de manière interchangeable sur ladite pièce inférieure au niveau d'une même position de fixation, et présentant chacune :
- une surface de butée de départ se trouvant à une distance différente de ladite même position de fixation ; et/ou
- une surface de butée d'arrivée se trouvant à une distance angulaire différente de la portion de châssis du dispositif d'entrée de commande contre laquelle ladite surface de butée d'arrivée vient en butée.

### Description des figures et modes de réalisation

D'autres avantages et caractéristiques apparaîtront à l'examen de la description détaillée de modes de réalisation nullement limitatifs, et des dessins annexés sur lesquels :
- la FIGURE 1 est une représentation schématique d'un exemple non limitatif d'un bouton de commande à course ajustable selon l'invention ;
- la FIGURE 2 est une représentation schématique de la pièce inférieure du bouton de la FIGURE 1 ;
- les FIGURES 3a et 3b sont des représentations schématiques de la pièce supérieure du bouton de la FIGURE 1 suivant deux vues différentes ;
- les FIGURES 4a et 4b sont des représentations schématiques d'un exemple d'ajustement de la position d'arrivée avec un bouton de commande disposé dans le châssis d'une manette représentée de manière partielle ; et
- la FIGURE 5 est une représentation d'un exemple d'ajustement de la position de départ avec un bouton de commande disposé dans le châssis d'une manette représentée de manière partielle.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieur. Cette sélection comprend au moins une caractéristique de préférence fonctionnelle sans détails structurels, ou avec seulement une partie des détails structurels si c'est cette partie qui est uniquement suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique.

Sur les figures et dans la suite de la description, les éléments communs à plusieurs figures conservent la même référence.

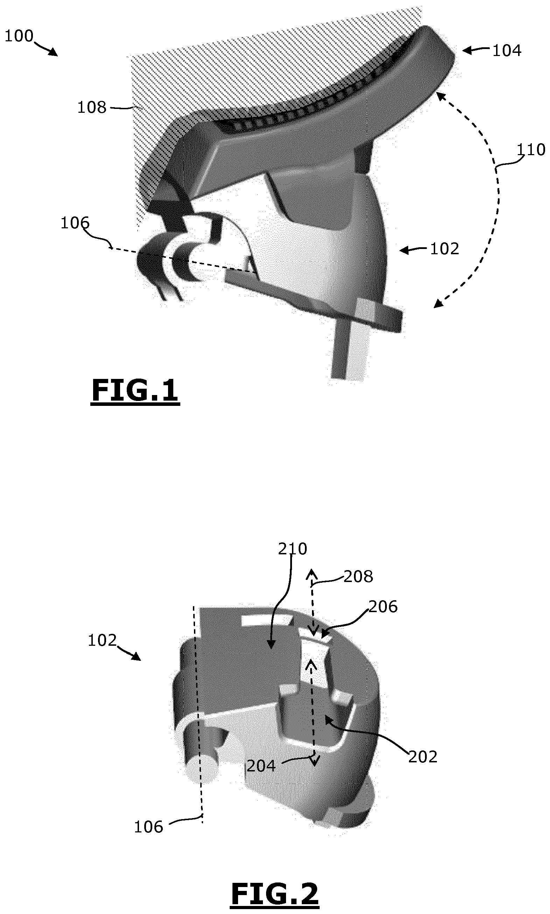

La FIGURE 1 est une représentation schématique d'un exemple de réalisation non limitatif d'un bouton de commande à course ajustable selon l'invention.

Le bouton de commande rotatif 100 représenté sur la FIGURE 1 comprend une pièce inférieure 102, également appelée pièce de base, et une pièce supérieure 104, également appelée pièce de manipulation, assemblées entre-elles de manière amovible.

La pièce inférieure 102 est prévue pour être fixée rotative sur un châssis d'un dispositif d'entrée de commande, également appelée « manette » dans la suite, au niveau de son axe de rotation 106. Plus particulièrement, la pièce inférieure 102 est prévue pour être fixée dans le châssis d'une manette de sorte qu'elle ne peut être montée/démontée sans démonter au moins partiellement ledit châssis.

Le bouton de commande 100 est rotatif dans un plan 108 perpendiculaire à l'axe de rotation 106, suivant une trajectoire 110 en arc de cercle ayant pour centre l'axe de rotation 106.

La FIGURE 2 est une représentation schématique de la pièce inférieure 102 du bouton de commande de la FIGURE 1.

La pièce inférieure 102 comporte une forme de fixation femelle 202, de section en forme de trapèze (ou de « T » inversé), prévue pour accueillir, suivant une direction 204 parallèle à l'axe de rotation 106 et perpendiculaire au plan de rotation 108, une forme de fixation mâle prévue sur la pièce supérieure 104, dans un sens pour fixer la pièce supérieure 104 avec la pièce inférieure 102 et dans le sens contraire pour enlever la pièce supérieure 104 de la pièce inférieure 102.

Cette forme de fixation femelle 202 permet une fixation d'une ou plusieurs pièces supérieures sur la pièce inférieure 102 en une position de fixation unique.

La pièce inférieure 102 comporte en outre une forme de verrouillage femelle 206, de section rectangulaire, prévue pour accueillir, suivant une direction 208, perpendiculaire à l'axe de rotation 106 et parallèle au plan de rotation 108, une forme verrouillage mâle prévue sur la pièce supérieure 104, lorsque la pièce supérieure est assemblée avec la pièce inférieure.

La direction 208 est sensiblement perpendiculaire à la surface supérieure 210 de la pièce inférieure 102 et la direction 204 est sensiblement parallèle à la surface supérieure 210 de la pièce inférieure 102.

Dans l'exemple représenté, la pièce inférieure 102 comporte une unique position de fixation, déterminée par la forme de fixation femelle 202, et permettant de fixer de manière amovible et interchangeable différentes pièces supérieures.

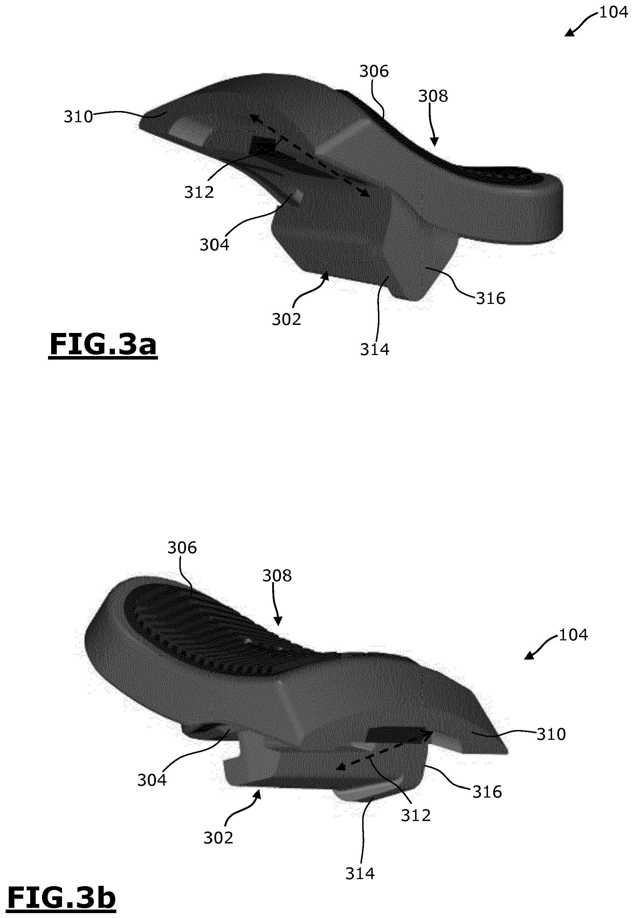

Les FIGURES 3a et 3b sont des représentations schématiques de la pièce supérieure 104 du bouton de commande 100 de la FIGURE 1 suivant deux vues différentes.

La pièce supérieure 104 comporte une forme de fixation mâle 302, de section en forme de trapèze (ou de « T » inversé), prévue pour s'insérer, suivant la direction 204 dans la forme de fixation femelle 202 prévue sur la pièce inférieure 102 pour fixer la pièce supérieure 104 à la pièce inférieure 102.

La pièce supérieure 104 comporte en outre, une forme de verrouillage mâle 304, de section rectangulaire, prévue pour s'insérer, suivant la direction 208, dans la forme de verrouillage femelle 206, prévue sur la pièce inférieure 102, lorsque la pièce supérieure 104 est assemblée avec la pièce inférieure 102. Les formes de verrouillage mâle 304 et femelle 206 coopèrent entre-elles pour maintenir la pièce supérieure 104 de manière fixe sur la pièce inférieure 102 et éviter un désassemblage intempestif de la pièce supérieure 104.

La pièce supérieure 104 comporte une surface supérieure 306 prévue pour entrer en contact avec un doigt de l'utilisateur, en particulier avec un index de l'utilisateur, lorsque l'utilisateur applique une pression sur le bouton de commande 100 pour entrer une commande. Sur cette surface supérieure 306, la pièce supérieure comporte un revêtement 308 souple présentant un plus grand coefficient de frottement. Ce revêtement 308 est réalisé en TPE.

Dans l'exemple représenté, l'utilisateur ne peut actionner le bouton de commande 100 qu'uniquement par l'intermédiaire de la surface supérieure 308 de la pièce supérieure 104.

La pièce supérieure 104 comporte une surface de butée 310, dite surface de butée de départ, située du côté de l'axe de rotation 106 du bouton de commande lorsque la pièce supérieure 104 est assemblée avec la pièce inférieure 102. Cette surface de butée de départ 310 est prévue pour venir en contact avec une portion de châssis d'une manette, lorsque le bouton de commande 100 est fixée sur ladite manette, et lorsque le bouton de commande se trouve dans sa position de repos dans laquelle aucun effort n'est appliqué sur le bouton de commande. Plus particulièrement, la surface de butée de départ 310 est prévue pour venir en contact contre une portion de châssis se trouvant du côté d'un bord avant d'un logement, aménagé dans le châssis, dans lequel ledit bouton de commande est mis en rotation, et en particulier un bord dudit logement se trouvant du côté d'une face avant dudit dispositif d'entrée de commande et du côté de l'axe de rotation 106.

En ajustant la distance, matérialisée par la flèche 312, entre la surface de butée de départ 310 et la position de fixation de la pièce supérieure 104 sur la pièce inférieure 102, il est possible d'ajuster la position de départ du bouton de commande 100. Plus la distance 312 sera grande plus le bouton de commande 100 sera « enfoncé », ou « en rotation », dans sa position de départ, sans qu'aucun effort ne soit appliqué sur le bouton de commande 100.

Ainsi, dans l'exemple décrit, l'ajustement de la position de départ est réalisé en prévoyant plusieurs pièces supérieures 104 présentant chacune une distance 312 entre sa surface de butée de départ 310 et la position de fixation différente des autres pièces supérieures. Ainsi, l'utilisateur peut modifier/ajuster la position de départ, de manière rapide et ergonomique, en remplaçant une pièce supérieure par une autre pièce supérieure.

La pièce supérieure 104 comporte une surface de butée 314, dite surface de butée d'arrivée, située sur un côté latéral de la pièce supérieure 104 de sorte qu'elle vient en butée contre une portion de châssis se trouvant du côté d'un bord latéral d'un logement, aménagé dans le châssis de la manette et dans lequel le bouton de commande 100 est mis en rotation, et en particulier un bord se trouvant du côté d'une face latérale de la manette.

Dans l'exemple représenté, la surface de butée d'arrivée 314 est prévue au niveau d'une extrémité, en regard vers la pièce inférieure 102, d'une forme 316 faisant saillie de la pièce supérieure 104, et de la pièce inférieure, du côté d'une face latérale de ladite pièce supérieure 104 perpendiculaire à l'axe de rotation 106 de la pièce inférieure 102.

En ajustant la distance angulaire, entre la surface de butée d'arrivée 314 et le bord du châssis contre lequel la surface de butée d'arrivée 104 vient en contact, il est possible d'ajuster la position d'arrivée du bouton de commande 100. Plus la distance angulaire 318 sera petite plus le bouton de commande 100 atteindra sa position d'arrivée rapidement, plus la course à effectuer pour atteindre la position d'arrivée sera petite.

Ainsi, dans l'exemple décrit, l'ajustement de la position d'arrivée est réalisé en prévoyant plusieurs pièces supérieures 104 présentant chacune une telle distance angulaire (entre sa surface de butée d'arrivée 314 et la portion de châssis en regard de ladite surface de butée d'arrivée 314 contre laquelle ladite surface de butée d'arrivée 314 vient en butée) différente des autres pièces supérieures. Ainsi, l'utilisateur peut modifier/ajuster la position d'arrivée, de manière rapide et ergonomique, en remplaçant une pièce supérieure par une autre pièce supérieure.

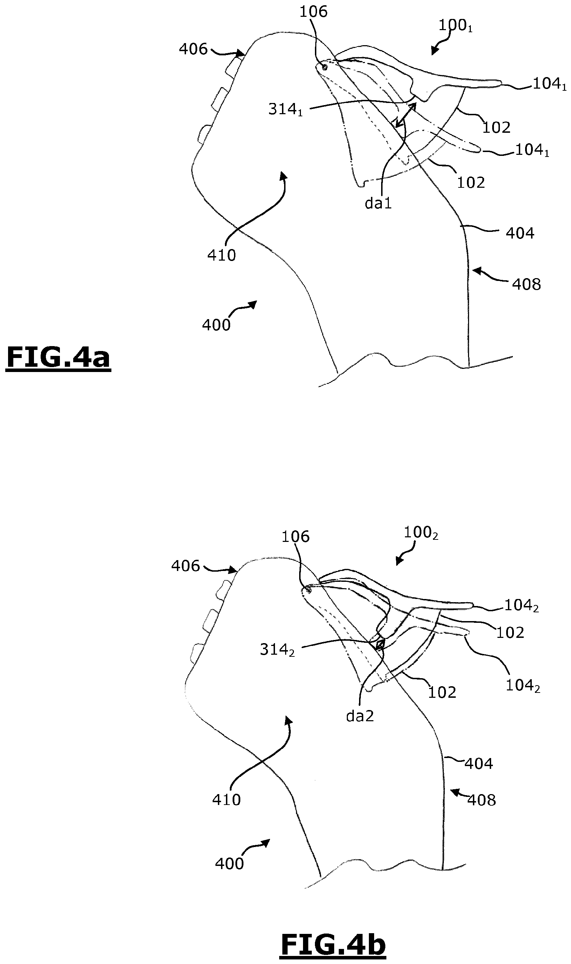

Les FIGURES 4a et 4b donnent une représentation d'un exemple d'ajustement de la position d'arrivée avec un bouton de commande disposé dans le châssis d'une manette représentée de manière partielle.

La FIGURE 4a et 4b représentent de manière incomplète une manette 400 comprenant un bouton de commande, respectivement 100₁ pour la FIGURE 4a et 100₂ pour la FIGURE 4b, monté rotative dans un logement aménagé dans le châssis 404 de la manette 400. La manette 400 comprenant une face avant 406 dirigée vers l'utilisateur lorsque la manette 400 est tenue par l'utilisateur, une face arrière 408 opposé à la face avant et une face latérale 410 rejoignant la face avant 406 et la face arrière 408.

Sur chacune des FIGURE 4a et 4b, le bouton de commande, respectivement 100₁ et 100₂, est représenté dans sa position de départ en trait plein et dans sa position d'arrivée avec un trait en pointillés.

Sur la FIGURE 4a, le bouton de commande 100₁ est formé par une pièce inférieure, par exemple la pièce inférieure 102 de la FIGURE 1. Sur la FIGURE 4a, le bouton de commande 100₁ comprend une pièce supérieure 104₁ dont la surface de butée d'arrivée 314₁ se trouve, à une distance angulaire, notée da1, de la portion de châssis contre laquelle elle vient en butée en position d'arrivée, lorsque le bouton de commande 100₂ se trouve dans sa position de départ.

Sur les FIGURE 4b, le bouton de commande 100₂ comprend la même pièce inférieure 102 que le bouton de commande 100₁ de la FIGURE 4a. A la différence de la FIGURE 4a, sur la FIGURE 4b, le bouton de commande 100₂ comprend une pièce supérieure 104₂ dont la surface de butée d'arrivée 314₂ se trouve, à une distance angulaire, notée da2, de la portion de châssis contre laquelle elle vient en butée en position d'arrivée, lorsque le bouton de commande 100₂ se trouve dans sa position de départ.

La distance angulaire da2 est plus petite que la distance angulaire da1. Par conséquent, pour le bouton de commande 100₂ la position d'arrivée du bouton est atteinte avec une rotation plus petite, c'est-à-dire avec une course plus petite, autrement dit plus rapidement, comparée au bouton de commande 100₁.

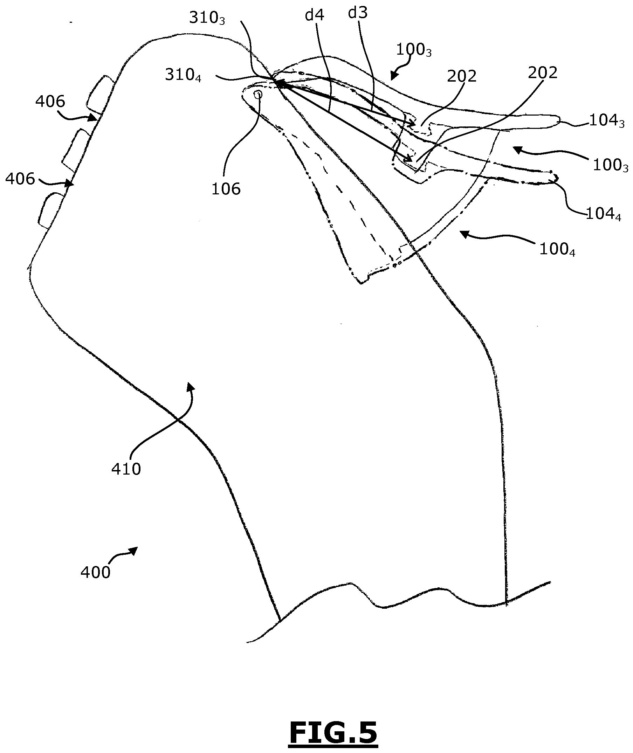

La FIGURE 5 est une représentation d'un exemple d'ajustement de la position de départ avec un bouton de commande disposé dans le châssis d'une manette représentée de manière partielle.

La FIGURE 5 représente de manière incomplète une manette 400 comprenant un bouton de commande, respectivement 100₃ et 100₄, monté rotative dans un logement aménagé dans le châssis 404 de la manette 400. La manette 400 comprenant une face avant 406 dirigée vers l'utilisateur lorsque la manette 400 est tenue par l'utilisateur, une face arrière 408 opposée à la face avant et une face latérale 410 rejoignant la face avant 406 et la face arrière 408.

Sur la FIGURE 5, les boutons de commande 100₃ et 100₄ sont représentés dans leur position de départ. Le bouton de commande 100₃ est représenté en trait plein et le bouton de commande 100₃ est représenté en pointillés.

Le bouton de commande 100₃ est formé par une pièce inférieure, par exemple la pièce inférieure 102 de la FIGURE 1. Le bouton de commande 100₃ comprend une pièce supérieure 104₃ dont la surface de butée de départ 310₃ se trouve à une distance, notée d3, par rapport à la position de fixation de la pièce supérieure 104₃ sur la pièce inférieure 102.

Le bouton de commande 100₄ comprend la même pièce inférieure 102 que le bouton de commande 100₃. A la différence du bouton de commande 100₃, le bouton de commande 100₄ comprend une pièce supérieure 104₄ dont la surface de butée départ 310₄ se trouve, à une distance, notée d4, par rapport à la position de fixation 202 de la pièce supérieure 104₄ sur la pièce inférieure 102.

La distance d3 est plus petite que la distance angulaire d4. Par conséquent, pour le bouton de commande 100₄ la position de départ est plus avancée, c'est-à-dire, présente une rotation plus grande, comparée au bouton de commande 100₃, sans qu'une pression ne soit appliquée par l'utilisateur.

Bien entendu, les exemples représentés sur les FIGURES 4a et 4b peuvent être combinés aux exemples représentés sur la FIGURE 5 de sorte qu'une même pièce supérieure réalise à la fois un ajustement de la position de départ du bouton de commande et un ajustement de la position d'arrivée du bouton de commande. Ainsi, chacune des pièces supérieures 104₃ et 104₄ peut comporter une surface de butée d'arrivée 314₁ ou 314₂.

Dans les exemples décrits, les pièces supérieures sont fixées à la pièce inférieure en une même position unique de fixation matérialisée par la forme femelle 202.

Suivant un mode de réalisation, non représenté sur les FIGURES, la ou les pièces supérieures peuvent être fixées à la pièce inférieure en au moins deux positions de fixations espacées dans le plan de rotation 108, en prévoyant :
- plusieurs moyens de fixation sur la pièce inférieure, par exemple plusieurs formes de fixation mâle ou femelle, telle que la forme de fixation femelle 202 ; et/ou
- plusieurs moyens de fixation sur la pièce supérieure, par exemple plusieurs formes de fixation mâle ou femelle, telle que la forme de fixation mâle 302.

Bien entendu l'invention n'est pas limitée aux exemples qui viennent d'être décrits.

## Revendications

1. Bouton de commande (100) pour un dispositif d'entrée de commande (400), prévu rotatif entre une position, dite de départ, lorsque ledit bouton de commande est au repos, et une position, dite d'arrivée, lorsqu'un effort est appliqué sur ledit bouton de commande (100) en vue d'entrer une commande, ledit bouton de commande (100) comprenant :
- une pièce (102), dite inférieure, prévue pour être fixée rotative, autour d'un axe de rotation (106), sur/dans un châssis (404) dudit dispositif d'entrée de commande (400), et
- une pièce (104), dite supérieure, prévue pour être fixée de manière démontable sur ladite pièce inférieure (102) et pour être manipulée par un doigt de l'utilisateur pour entrer une commande ;
**caractérisé en ce que** ladite pièce supérieure (104) comporte :
- une surface (310), dite surface de butée de départ, prévue pour venir en butée contre une portion dudit châssis (404) dudit dispositif (400) lorsque ledit bouton de commande (100) est en position de départ de sorte à ajuster ladite position de départ ; et/ou
- une surface (314), dite surface de butée d'arrivée, prévue pour venir en butée contre une portion dudit châssis (404) dudit dispositif d'entrée de commande (400) lorsque ledit bouton de commande (100) est en position d'arrivée de sorte à ajuster ladite position d'arrivée.

2. Bouton (100) selon la revendication 1, **caractérisé en ce que** la pièce inférieure (102) comprend au moins un moyen de fixation (202), de manière interchangeable, en une même position de fixation, d' au moins deux dites pièces supérieures (104₁-104₄), présentant chacune :
- ladite surface de butée de départ (310₃-310₄) se trouvant à une distance différente de ladite même position de fixation ; et/ou
- ladite surface de butée d'arrivée (314₁-314₂) se trouvant à une distance angulaire différente de la portion de châssis du dispositif d'entrée de commande (400) contre laquelle ladite surface de butée d'arrivée (314₁-314₂) est prévue pour venir en butée.

3. Bouton selon l'une quelconque des revendications précédentes, **caractérisé en ce qu'**il comprend au moins un moyen de fixation de la pièce supérieure sur ladite pièce inférieure en au moins deux positions différentes espacées dans la plan de rotation dudit bouton de commande et se trouvant à des distances différentes :
- de la portion de châssis contre laquelle la surface de butée de départ est prévue pour venir en butée, et/ou
- de la portion de châssis contre laquelle la surface de butée d'arrivée est prévue pour venir en butée.

4. Bouton (100) selon l'une quelconque des revendications précédentes, **caractérisé en ce que** la surface de butée de départ (310) se trouve du côté de l'axe de rotation (106) de la pièce inférieure (102) de sorte qu'elle est prévue pour venir en butée contre une portion de châssis se trouvant du côté dudit axe de rotation (106).

5. Bouton (100) selon l'une quelconque des revendications précédentes, **caractérisé en ce que** la surface de butée d'arrivée (314) se trouve du côté d'une face latérale dudit bouton de commande de sorte qu'elle est prévue pour venir en butée contre une portion de châssis se trouvant du côté d'un bord latéral d'un logement dans lequel ledit bouton de commande est mis en rotation, et en particulier un bord se trouvant du côté d'une face latérale (410) dudit dispositif d'entrée de commande (400).

6. Bouton (100) selon l'une quelconque des revendications précédentes, **caractérisé en ce que** la pièce supérieure (104) est fixée sur la pièce inférieure (102) suivant une direction d'assemblage (204) parallèle à l'axe de rotation (106) de ladite pièce inférieure (102).

7. Bouton (100) selon l'une quelconque des revendications précédentes, **caractérisé en ce que** l'une des pièces inférieure et supérieure comprend une forme de fixation mâle (302), prévue pour s'insérer dans une forme de fixation femelle (202) prévue sur l'autre des pièces inférieure et supérieure, suivant une direction d'assemblage (204) parallèle à l'axe de rotation (106) de la dite pièce inférieure (102).

8. Bouton (100) selon l'une quelconque des revendications précédentes, **caractérisé en ce qu'**il comprend un moyen de verrouillage en rotation et/ou en translation de la pièce supérieure par rapport à la pièce inférieure, après que la pièce supérieure est fixée à la pièce inférieure.

9. Bouton (100) selon l'une quelconque des revendications précédentes, **caractérisé en ce que** la pièce supérieure (104) comporte une surface (308), dite de manipulation, prévue pour recevoir un appui d'un doigt d'un utilisateur pour entrer une commande.

10. Bouton (100) selon la revendication 9, **caractérisé en ce qu'**au moins une partie de la surface de manipulation comporte un revêtement (306) présentant un plus petit coefficient de dureté et/ou un plus grand coefficient de frottement.

11. Kit pour réaliser un bouton de commande selon l'une quelconque des revendications 2-10, comprenant :
- au moins une dite pièce inférieure (102), et
- au moins deux dites pièces supérieures (104₁-104₃) pouvant être montées de manière interchangeables sur ladite pièce inférieure (102) en une même position de fixation, et présentant chacune :
- ladite surface de butée de départ (310₃-310₄) se trouvant à une distance différente de ladite même position de fixation ; et/ou
- ladite surface de butée d'arrivée (314₁-314₂) se trouvant à une distance angulaire différente de la portion de châssis du dispositif d'entrée de commande (400) contre laquelle ladite surface de butée d'arrivée (314₁-314₂) est prévue pour venir en butée.

12. Dispositif (400) d'entrée de commande, tel qu'une manette de jeu, comprenant au moins un bouton de commande (100, 100₁-100₄) selon l'une quelconque des revendications 1 à 10.

13. Dispositif (400) selon la revendication précédente, **caractérisé en ce qu'**il comprend deux faces latérales, prévue chacune pour être tenue par une main de l'utilisateur, ledit dispositif (400) comprenant, du côté de chacune desdites faces latérales, au moins un bouton de commande (100, 100₁-100₄) selon l'une quelconque des revendications 1 à 10, agencé chacun pour être actionné par un index de l'utilisateur.

14. Procédé pour réaliser un dispositif d'entrée de commande (400) selon l'une quelconque des revendications 12 ou 13, **caractérisé en ce qu'**il comprend les étapes suivantes réalisées pour au moins un bouton de commande (100, 100₁-100₄) :
- ouvrir au moins partiellement un châssis (404) dudit dispositif (400),
- fixer la pièce inférieure (102) libre en rotation audit dispositif (400),
- fermer ledit châssis (404) dudit dispositif (400),
- assembler la pièce supérieure (104₁-104₄) sur ladite pièce inférieure (102).

15. Procédé selon la revendication précédente, **caractérisé en ce qu'**il comprend en outre une étape de sélection d'une pièce supérieure parmi au moins deux pièces supérieures (104₁-104₄), chacune desdites pièces supérieures pouvant être montée de manière interchangeable sur la pièce inférieure (102) au niveau d'une même position de fixation, et présentant chacune :
- ladite surface de butée de départ (310₃-310₄) se trouvant à une distance différente de ladite même position de fixation ; et/ou
- ladite surface de butée d'arrivée (314₁-314₂) se trouvant à une distance angulaire différente de la portion de châssis du dispositif d'entrée de commande (400) contre laquelle ladite surface de butée d'arrivée vient en butée.

## Patentansprüche

1. Steuerknopf (100) für eine Befehlseingabevorrichtung (400), der zwischen einer Position, Ausgangsposition genannt, bei der der Steuerknopf in Ruhestellung ist, und einer Position, Endposition genannt, bei der zum Eingeben eines Befehls eine Kraft auf den Steuerknopf (100) ausgeübt wird, drehbar gelagert ist, wobei der Steuerknopf (100) enthält:
- ein Teil (102), unteres Teil genannt, das dazu vorgesehen ist, um eine Drehachse (106) drehbar an/in einem Grundkörper (404) der Befehlseingabevorrichtung (400) befestigt zu sein, und
- ein Teil (104), oberes Teil genannt, das dazu vorgesehen ist, abnehmbar am unteren Teil (102) befestigt und mit dem Finger eines Benutzers zum Eingeben eines Befehls betätigt zu werden;
**dadurch gekennzeichnet, dass** das obere Teil (104) das Folgende enthält:
- eine Fläche (310), Ausgangsanschlagfläche genannt, die dazu vorgesehen ist, dann an einen Abschnitt des Grundkörpers (404) der Vorrichtung (400) dann in Anschlag zu gelangen, wenn der Steuerknopf (100) in der Ausgangsposition ist, so dass die Ausgangsposition eingestellt wird; und/oder
- eine Fläche (314), Endanschlagfläche genannt, die dazu vorgesehen ist, dann an einen Abschnitt des Grundkörpers (404) der Befehlseingabevorrichtung (400) in Anschlag zu gelangen, wenn der Steuerknopf (100) in Endposition ist, so dass die Endposition eingestellt wird.

2. Knopf (100) nach Anspruch 1, **dadurch gekennzeichnet, dass** das untere Teil (102) zumindest eine Befestigungseinrichtung (202) zum austauschbaren Befestigen von zumindest zwei der oberen Teile (104₁-104₄) in einer gleichen Befestigungsposition enthält, die jeweils aufweisen:
- die Ausgangsanschlagfläche (310₃-310₄), die sich in unterschiedlichem Abstand von der gleichen Befestigungsposition befindet; und/oder
- die Endanschlagfläche (314₁-314₂), die sich in unterschiedlichem Winkelabstand von dem Grundkörperabschnitt der Befehlseingabevorrichtung (400) befindet, an den die Endanschlagfläche (314₁-314₂) in Anschlag gelangen soll.

3. Knopf nach einem der vorangehenden Ansprüche, **dadurch gekennzeichnet, dass** er zumindest eine Befestigungseinrichtung zum Befestigen des oberen Teils an das untere Teil in zumindest zwei unterschiedlichen Positionen enthält, die in der Rotationsebene des Steuerknopfes beabstandet sind und sich in unterschiedlichen Abständen befinden von:
- dem Grundkörperabschnitt, der zum Anschlagen der Ausgangsanschlagfläche vorgesehen ist, und/oder,
- dem Grundkörperabschnitt, der zum Anschlagen der Endanschlagfläche vorgesehen ist.

4. Knopf (100) nach einem der vorangehenden Ansprüche, **dadurch gekennzeichnet, dass** die Ausgangsanschlagfläche (310) sich auf der Seite der Drehachse (106) des unteren Teils (102) befindet, so dass sie an einen Grundkörperabschnitt in Anschlag gelangen kann, der sich auf der Seite der Drehachse (106) befindet.

5. Knopf (100) nach einem der vorangehenden Ansprüche, **dadurch gekennzeichnet, dass** die Endanschlagfläche (314) sich auf der Seite einer Seitenfläche des Steuerknopfs befindet, so dass sie an einen Grundkörperabschnitt in Anschlag gelangen kann, der sich auf der Seite eines Seitenrandes einer Aufnahme befindet, in welcher der Steuerknopf in Drehung versetzt wird, wobei sich insbesondere ein Rand auf der Seite einer Seitenfläche (410) der Befehlseingabevorrichtung (400) befindet.

6. Knopf (100) nach einem der vorangehenden Ansprüche, **dadurch gekennzeichnet, dass** das obere Teil (104) an das untere Teil (102) in einer Montagerichtung (204) befestigt ist, die parallel zur Drehachse (106) des unteren Teils (102) verläuft.

7. Knopf (100) nach einem der vorangehenden Ansprüche, **dadurch gekennzeichnet, dass** das untere oder das obere Teil eine Einsteckbefestigungsform (302) aufweist, die dazu vorgesehen ist, sich in eine an dem entsprechend anderen Teil aus unterem und oberem Teil vorgesehene Aufnahmebefestigungsform (202) in Montagerichtung (204) parallel zur Drehachse (106) des unteren Teils (102) einzufügen.

8. Knopf (100) nach einem der vorangehenden Ansprüche, **dadurch gekennzeichnet, dass** er eine Dreh- und/oder Verschiebesperreinrichtung für das obere Teil relativ zu dem unteren Teil, nachdem das obere Teil an dem unteren Teil befestigt ist, enthält.

9. Knopf (100) nach einem der vorangehenden Ansprüche, **dadurch gekennzeichnet, dass** das obere Teil (104) eine Fläche (308), Betätigungsfläche genannt, enthält, die dazu vorgesehen ist, einen Druck von einem Finger eines Benutzers zum Eingeben eines Befehls aufzunehmen.

10. Knopf (100) nach Anspruch 9, **dadurch gekennzeichnet, dass** zumindest ein Teil der Betätigungsfläche eine Beschichtung (306) aufweist, die einen geringeren Härtegrad und/oder einen höheren Reibungskoeffizient aufweist.

11. Bausatz zum Herstellen eines Steuerknopfs nach einem der Ansprüche 2 bis 10, enthaltend:
- zumindest ein sogenanntes unteres Teil (102), und
- zumindest zwei sogenannte obere Teile (104₁-104₃), die austauschbar an das untere Teil (102) in einer gleichen Befestigungsposition angebracht werden können und jeweils aufweisen:
- die sogenannte Ausgangsanschlagfläche (310₃-310₄), die sich in unterschiedlichem Abstand von dergleichen Befestigungsposition befindet; und/oder
- die sogenannte Endanschlagfläche (314₁-314₂), die sich in unterschiedlichem Winkelabstand von dem Grundkörperabschnitt der Befehlseingabevorrichtung (400) befindet, an den die Endanschlagfläche (314₁-314₂) in Anschlag gelangen soll.

12. Befehlseingabevorrichtung (400), wie ein Joystick, enthaltend zumindest einen Steuerknopf (100, 100₁-100₄) nach einem der Ansprüche 1 bis 10.

13. Vorrichtung (400) nach dem vorangehenden Anspruch, **dadurch gekennzeichnet, dass** sie zwei Seitenflächen enthält, die jeweils dazu vorgesehen sind, von einer Hand des Benutzers gehalten zu werden, wobei die Vorrichtung (400) auf der Seite einer jeden der Seitenflächen zumindest einen Steuerknopf (100, 100₁-100₄) nach einem der Ansprüche 1 bis 10 enthält, der jeweils dazu vorgesehen ist, von einem Benutzer mit dem Zeigefinger betätigt zu werden.

14. Verfahren zum Herstellen einer Befehlseingabevorrichtung (400) nach einem der Ansprüche 12 oder 13, **dadurch gekennzeichnet, dass** es die nachstehenden Schritte, die für zumindest einen Steuerknopf (100, 100₁-100₄) ausgeführt werden, umfasst:
- zumindest teilweises Öffnen eines Grundkörpers (404) der Vorrichtung (400),
- Befestigen des unteren Teils (102) frei drehbar an der Vorrichtung (400),
- Verschließen des Grundkörpers (404) der Vorrichtung (400),
- Montieren des oberen Teils (104₁-104₄) an das untere Teil (102).

15. Verfahren nach dem vorangehenden Anspruch, **dadurch gekennzeichnet, dass** es ferner einen Schritt des Auswählens eines oberen Teils aus zumindest zwei oberen Teilen (104₁-104₄) umfasst, wobei jedes der oberen Teile austauschbar an das untere Teil (102) im Bereich einer gleichen Befestigungsposition angebracht werden kann und jeweils aufweist:
- die Ausgangsanschlagfläche (310₃-310₄), die sich in unterschiedlichem Abstand von der gleichen Befestigungsposition befindet; und/oder
- die Endanschlagfläche (314₁-314₂), die sich in unterschiedlichem Winkelabstand von dem Grundkörperabschnitt der Befehlseingabevorrichtung (400) befindet, an den die Endanschlagfläche (314₁-314₂) in Anschlag gelangt.

## Claims

1. Command button (100) for a command input device (400) provided rotational between one position, referred to as starting position, when said command button is at rest and one position, referred to as ending position, when a force is applied to said command button (100) with a view to entering a command, said command button (100) comprising:
- a part (102), said lower part, provided in order to be fixed rotational about an axis of rotation (106), on/in a frame (404) of said command input device (400), and
- a part (104), said upper part, provided in order to be removably fixed onto said lower part (102) and be actuated by a finger of a user in order to enter a command;
**characterized in that** said upper part (104) comprises:
- a surface (310), said starting abutment surface, provided in order to abut against a portion of said frame (404) of said device (400) when said command button (100) is in the starting position so as to adjust said starting position; and/or
- a surface (314), said ending abutment surface, provided in order to abut against a portion of said frame (404) of said command input device (400) when said command button (100) is in the ending position, so as to adjust said ending position.

2. The button (100) according to claim 1, **characterized in that** the lower part (102) comprises at least one means (202) for fixing, interchangeably, in one and the same fixing position, at least two upper parts (104₁-104₄), each having:
- a starting abutment surface (310₃-310₄) located at a different distance from said same fixing position; and/or
- an ending abutment surface (314₁-314₂) located at a different angular distance from the frame portion of the command input device (400) against which said ending abutment surface (314₁-314₂) is provided to abut.

3. The button according to any one of the preceding claims, **characterized in that** it comprises at least one means for fixing the upper part onto said lower part in at least two different positions spaced apart in the plane of rotation of said command button and situated at different distances:
- from the frame portion against which the starting abutment surface is provided to abut, and/or
- from the frame portion against which the ending abutment surface is provided to abut.

4. The button (100) according to any one of the preceding claims, **characterized in that** the starting abutment surface (310) is located on the side of the axis of rotation (106) of the lower part (102) such that it is provided to abut against a frame portion located on the side of said axis of rotation (106).

5. The button (100) according to any one of the preceding claims, **characterized in that** the ending abutment surface (314) is located on the side of a lateral face of said command button such that it is provided to abut against a frame portion located on the side of a lateral edge of a recess in which said command button is rotated, and in particular an edge located on the side of a lateral face of said command input device (400).

6. The button (100) according to any one of the preceding claims, **characterized in that** the upper part (104) is fixed onto the lower part (102) in a direction of assembly (204) parallel to the axis of rotation (106) of said lower part (102).

7. The button (100) according to any one of the preceding claims, **characterized in that** one of the lower and upper parts comprises a male fixing shape (302), provided in order to be inserted into a female fixing shape (202) provided on the other one of the lower and upper parts, in a direction of assembly (204) parallel to the axis of rotation (106) of said lower part (102).

8. The button (100) according to any one of the preceding claims, **characterized in that** it comprises a means for locking the upper part in rotation and/or in translation with respect to the lower part, after the upper part is fixed onto the lower part.

9. The button (100) according to any one of the preceding claims, **characterized in that** the upper part (104) comprises a surface (308), said manipulation surface, provided in order to receive a press of a finger of a user in order to enter a command.

10. The button (100) according to any one of the preceding claims, **characterized in that** at least a part of the manipulation surface comprises a covering (306) having a lower coefficient of hardness and/or a higher coefficient of friction.

11. A kit for producing a command button according to any one of claims 2-10, comprising:
- at least one lower part (102), and
- at least two upper parts (104₁-104₃) being able to be mounted interchangeably on said lower part (102) in one and same fixing position, and each having:
- the starting abutment surface (310₃-310₄) located at a different distance from said same fixing position; and/or
- the ending abutment surface (314₁-314₂) located at a different angular distance from the frame portion of the command input device (400) against which said ending abutment surface is provided to abut (314₁-314₂).

12. A command input device (400), such as a game controller, comprising at least one command button (100, 100₁-100₄) according to any one of claims 1 to 10.

13. The device (400) according to the preceding claim, **characterized in that** it comprises two lateral faces, each provided in order to be held by a hand of the user, said device (400) comprising, on the side of each of said lateral faces, at least one command button (100, 100₁-100₄) according to any one of claims 1 to 10, each arranged in order to be actuated by a forefinger of the user.

14. A method for producing a command input device (400) according to either one of claims 12 or 13, **characterized in that** it comprises the following steps carried out for at least one command button (100, 100₁-100₄):
- opening a frame (404) of said device (400) at least partially,
- fixing the lower part (102) free in rotation to said device (400),
- closing said frame (404) of said device (400),
- assembling the upper part (104₁-104₄) onto said lower part (102).

15. The method according to the preceding claim, **characterized in that** it also comprises a step of selecting an upper part from at least two upper parts (104₁-104₄), each of said upper parts being able to be mounted interchangeably on the lower part (102) at one and the same fixing position, and each having:
- the starting abutment surface (310₃-310₄) located at a different distance from said same fixing position; and/or
- the ending abutment surface (314₁-314₂) located at a different angular distance from the frame portion of the command input device (400) against which said ending abutment surface abuts.
